# EUROPEAN PATENT SPECIFICATION

(11) **EP 4 484 914 B1**
(45) Date of publication and mention of the grant of the patent: **09.09.2026**
(21) Application number: 24184738.3
(22) Date of filing: 26.06.2024
(51) Int. Cl.: G01M 3/40

(54) **HIGH VOLTAGE LEAK DETECTION**
HOCHSPANNUNGSLECKDETEKTION
DÉTECTION DE FUITE À HAUTE TENSION

(30) Priority: 26.06.2023 US 202363523240 P
(43) Date of publication of application: 01.01.2025
(73) Proprietor: ATS Corporation, Cambridge, ON N3H 4R7 (CA)
(72) Inventor: Kleinikkink, Stanley Wellington, Cambridge (CA); HOGAN, Roger, Cambirdge (CA); ASHRAFIZADEH, Amir, Cambridge (CA); ALEXANDER, Calin-Adrian, Cambridge (CA)
(74) Representative: Noble, Nicholas

(56) References cited:
- WO-A1-2020/069464
- DE-A1- 102021 133 158
- KR-B1- 102 417 975

## Description

### RELATED APPLICATIONS

The current application claims priority to US Provisional Application No. 63/523,240 Filed June 26, 2023 entitled, "High Voltage Leak Detection".

### TECHNICAL FIELD

The current disclosure relates to detecting leaks in a container containing a liquid, and in particular to leak detection using high voltage testing.

### BACKGROUND

The storage and transport of liquids is important in many industries including in the pharmaceutical industry. Containers such as vials, bottles, tubes, and syringes may be used for storing and transporting pharmaceuticals. These containers, which often need to be sterilized, can be made of glass. While glass is well suited for sterilization and holding pharmaceuticals, the containers can be susceptible to minor cracks or pin holes or other defects that can cause leaks, rendering the container unsuitable for purposes requiring a sealed container.

A high voltage leak detection technique can be used to test the containers filled with a liquid that conducts electricity for leaks. The high voltage leak detection process spins the container in a horizontal orientation. The container is spun in a horizontal orientation in order to force the liquid around the entire container. The liquid is forced into any cracks or defects as a result of the spinning of the container. Since the glass container is an insulator, any cracks or defects that are filled with the conductive liquid can be detected by applying a high voltage to the container. Spinning the container in the horizontal orientation ensures that the liquid reaches all parts of the container, including those portions that would be above the liquid level with the container in the vertical orientation.

An additional, alternative and or improved process for leak detection is desirable.

DE 10 2021 133158 A1 (Koerber Pharma Inspection GMBH) describes a device for leak testing a container, comprising a first electrode, a second electrode which is arranged at a distance from the first electrode so that a space for arranging the container is provided between the electrodes, a voltage supply which is designed for this is to apply a voltage between the first electrode and the second electrode, and at least one analysis unit, which is designed to analyze a current and/or voltage profile that develops between the first electrode when a container to be checked for leaks is present and adjusting the second electrode to detect a leaky container based thereon. The device is characterized in that the power supply is designed to apply a DC voltage between the first electrode and the second electrode, preferably a high-voltage DC voltage in the range from 500 V to 50 kV, preferably in the range from 10 kV to 50 kV and most preferably in the range of 30kV to 50kV.

KR 102 417 975 B1 (Packaging Tech & Inspection LLC) describes a method and apparatus for determining the presence of a leak in a package includes generating an alternating high voltage having a direct current high voltage offset in a circuit. The packaging is placed between a test electrode and a detection electrode positioned within the circuit. The test electrode applies AC high voltage with DC high voltage offset to the packaging. The current flow through the packaging is then detected by a detection electrode. The detector then processes the current flow and sends the processed signal to a programmable logic controller that determines if there is a leak in the packaging. If there is a leak, a signal is sent to the display to notify the user.

The invention provides a method for detecting a leak in a container according to claim 1, a system for detecting a leak in a container according to claim 10 and a non-transitory computer readable medium according to claim 12.

### BRIEF DESCRIPTION OF THE DRAWINGS

Further features and advantages of the present disclosure will become apparent from the following detailed description, taken in combination with the appended drawings, in which:
FIG. 1 depicts a process for leak detection with a container in a vertical orientation;
FIG. 2 depicts a further process for leak detection with a container in a vertical orientation;
FIG. 3 depicts a method for leak detection with a container in a vertical orientation; and
FIG. 4 depicts a system incorporating leak detection with a container in a vertical orientation.

### DETAILED DESCRIPTION

In accordance with the present disclosure there is provided a method for detecting a leak in a container as defined in claim 1.

In a further embodiment of the method, the first RPM level is above a testing RPM range of the high-voltage leak detection process and the second RPM level is within the testing RPM range of the high-voltage leak detection process.

In a further embodiment of the method, the first RPM is approximately 3000 RPMs and the second RPM level is approximately 1500RPMs.

In a further embodiment of the method, the first RPM level is within a testing RPM range of the high-voltage leak detection process. The method of any one of claims 1 to 4, wherein the high-voltage leak detection process provides an indication of whether the container passed or failed the testing.

According to the claimed invention, the method further comprises performing at least one additional testing procedure while the container is still held in the vertical orientation.

During the filling and/or packaging of the containers with the pharmaceutical, it is highly desirable to check the container for any cracks or holes in the container that could result in a leak. One technique for checking for leaks that can be used with a non-conductive container that is at least partially filled with a conductive liquid is to use high voltage leak detection. In high voltage leak detection, the container is spun at a relatively high RPM, which will force the conductive liquid into any cracks or holes. The electrical characteristics of a container with no cracks or holes will differ from those with cracks/holes filled with the conductive liquid when a high voltage is applied. The difference in the electrical characteristics can be detected and used to identify containers with cracks and/or holes, which can subsequently rejected from packaging.

The high voltage leak detection relies upon the conductive liquid in the container being present in the cracks/holes. As such, the containers have been rotated in a horizontal position to ensure that the liquid can be forced into any cracks/holes even if the cracks/holes are above a fill level of the container in the vertical orientation. While the leak detection with the container in a horizontal position functions well, it can be a relatively slow process during packaging as it can require repositioning how the container is held. In an automated, or semi-automated, packaging process such repositioning operations can slow the process as well as increase the complexity of the packaging system.

As described further below, a high voltage leak detection process is performed with the container oriented in the vertical orientation while still ensuring that cracks/holes above a liquid fill level can still be detected. The container is spun to an RPM that is sufficiently high to cause the liquid to be forced up the sides of the container up to the top of the container. With the liquid forced up the sides, and into and cracks/holes, leaks can be detected using a high voltage leak detection technique. The vertical high voltage leak detection described herein can provide a higher throughput packaging system since the container may not need to be repositioned for different operations. That is, other operations, such as detecting foreign particles within the container, can be performed with the container held in the same orientation.

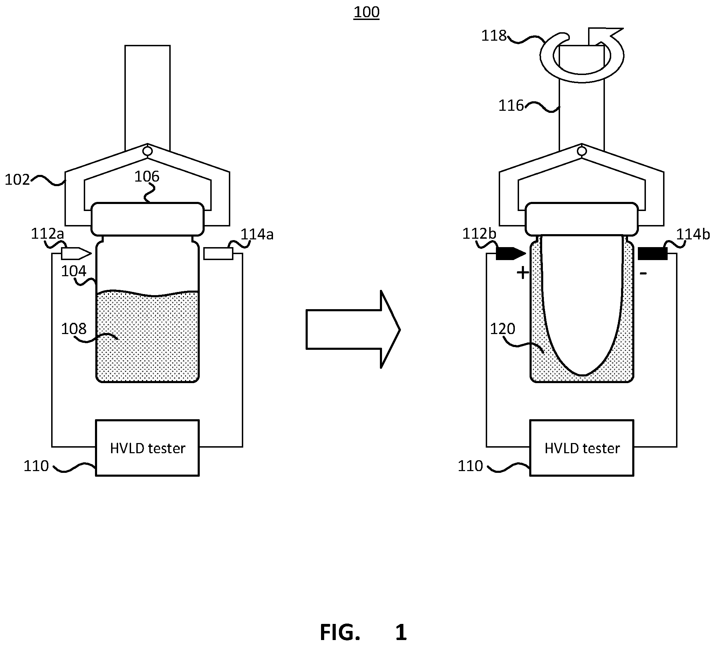

FIG. 1 depicts a process for leak detection with a container in a vertical orientation. The process 100 depicts an actuator 102 that can hold a container in a vertical orientation. The actuator 102 is depicted schematically as a gripper style actuator that can grip a cap of the container; however, other types of actuators can be used to hold the container. Additionally, although the actuator 102 is depicted as contacting the container at the top or cap of the container, different actuators may contact the container at various different locations. The container 104 is depicted as a glass vial sealed with a cap 106. Different containers may be used such as ampules, tubes, syringes, etc. Regardless of the particular shape of the container it is at least partially filled with a liquid 108. In order for the high voltage leak detection process to function properly, the liquid is electrically conductive and the container is not electrically conductive, or at least significantly less conductive compared to the liquid. A high voltage leak detection (HVLD) tester 110 comprises the electronics necessary to generate the high voltage for testing as well as for monitoring the electrical characteristics of the container during the test. The voltage can be applied to the container by a pair of electrodes 112a, 114a. The electrodes may be stationary, or one or more of the electrodes 112a, 114a may move along the container, for example by raising/lowering the container relative to the electrodes, in order to test different portions of the container.

Once the container is held by the actuator 102 in the vertical orientation, a second actuator 116 spins the container 104 up to a sufficiently high RPM (revolution per minute) depicted by arrow 118 that will cause the liquid 120 to rise up the sides of the container. With the liquid forced all the way up the container walls by the high RPM, it will enter any cracks or holes present in the container. With the liquid forced up the walls and into any cracks/holes present, the HVLD tester 110 can apply the high voltage to the electrodes, depicted by solid black electrodes 112b, 114b, and measure the resulting electrical characteristics in order to test for leaks. As a result of the measurements, the HVLD tester can provide an indication of whether or not any leaks were detected in the container.

Although the specific details of the HVLD tester 110 can vary, the basis of the process is a difference in the equivalent electrical circuit of a good container compared to a bad container. With the electrodes applying a voltage across the good container, the equivalent circuit may be represented as a voltage applied across two capacitors representing the container walls with a resistor, representing the conductive liquid, connected between the two capacitors. In a bad container, the equivalent circuit has at least one of the capacitors eliminated since the conductive liquid will flow through the container wall through the crack/hole. The difference in the electrical characteristics between the two different equivalent circuits can be detected and the container passed or failed as a result.

Although not depicted in FIG. 1, the HVLD tester provides an indication of whether the container passed the leak detection test, that is, no cracks or holes were detected, or failed the test. The indication may be provided in various ways, including an audio signal, a visual signal, and/or an electrical signal. The indication of the test result may be provided to one or more operators and/or different components of a filling and packaging system. For example, the HVLD tester may provide data to a controller that can move the container either to a rejected container location or line or to an accepted location or line.

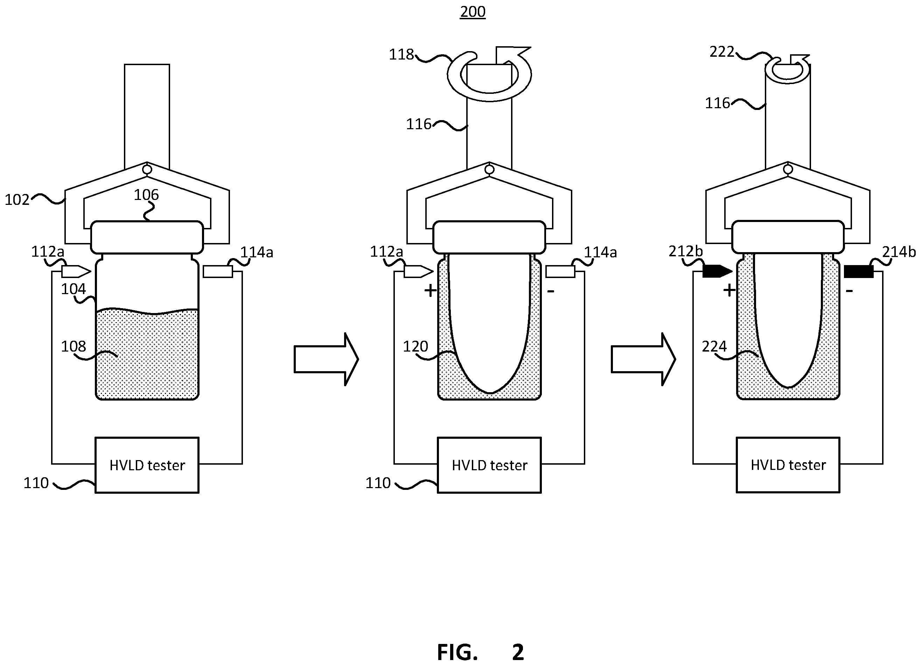

FIG. 2 depicts a process for leak detection with a container in a vertical orientation. The process 200 is similar to the process 100 described above. However, in the process of FIG. 2, it is assumed that the HVLD tester 210 has an operating range specifying a testing RPM of the container that it can operate at and that the testing RPM of the tester is below the RPM, depicted by arrow 118, that causes the liquid to rise up the sides of the container 120. In such a scenario, the container is spun to the first RPM 118 that is above the testing RPM, in order to force the liquid 120 up walls and then the RPM is reduced, depicted by arrow 222 to be within the testing RPM range of the HVLD tester 110. Although the RPM is reduced, the liquid 224 may still remain raised up the container side walls, at least for short period of time. Once the RPM is within the testing range, the HVLD tester 110 can apply the high voltage, depicted by solid black electrodes 112b, 114b, and determine if the container has leaks or not.

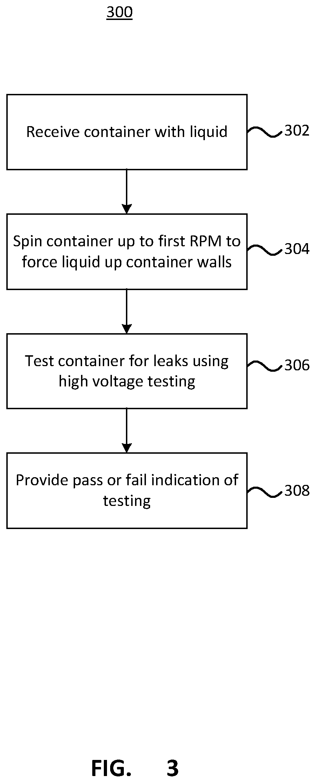

FIG. 3 depicts a method for leak detection with a container in a vertical orientation. The method 300 begins with receiving a container that is at least partially filled with a liquid (302). The container is held in a vertical orientation. The liquid in the container is a conductive liquid and the container is non-conductive, or at least substantially less conductive compared to the liquid. The container is filled with enough liquid that when the container is spun at a high RPM there is enough liquid to cover the side walls of the container to the top of the container. With the container in the vertical orientation, it is spun up to a first RPM (304) that is sufficient to force the liquid within the container up the side walls of the container. As the liquid is spun up the container walls, it is forced into any defects such as cracks and/or holes in the container. The container is tested for leaks using a high voltage leak detection process (306) by applying a high voltage across the container and measuring the resulting electrical characteristics to determine if there is a leak or not in the container. The test is performed while the conductive liquid remains raised up along the side walls of the container. An indication of whether or not the container passed or failed the leak test can be provided (308) and subsequent actions taken based on the indication. For example, a container that failed the leak detection test can be moved to a rejection area or rejection line. Containers that passed the leak detection test can continue passing through a packaging line or process.

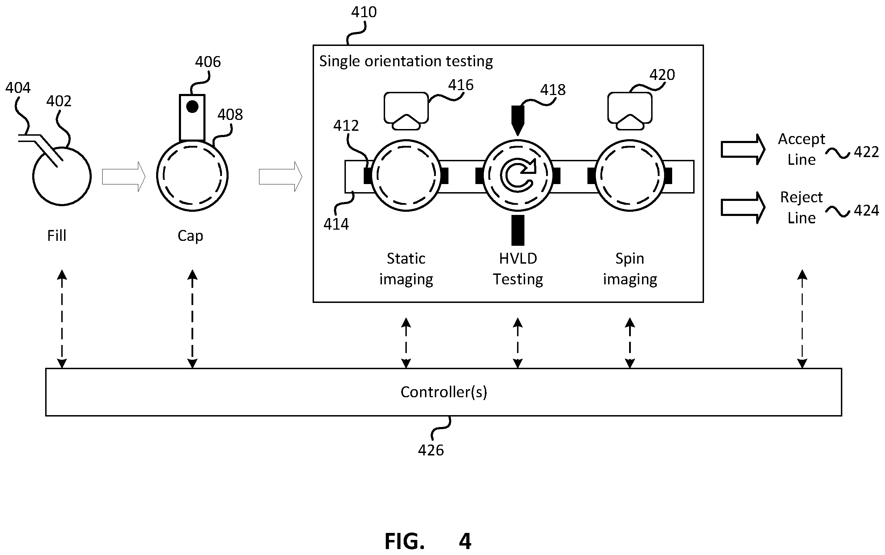

FIG. 4 depicts a system incorporating leak detection with a container in a vertical orientation. The system 400 may incorporate the vertical high voltage leak detection as well as other processes in the filling and packaging process. A container 402 may be processed in an autonomous, or semi-autonomous filling and packaging process in which the container, which may be previously sterilized, or sterilized in an operation or station not depicted in FIG. 4, is filled 404. The container may be filled or partially filled with a liquid and then moved to a capping operation 406 in which a cap 408 can be fixed to the container 402. Although depicted as applying a cap to the container, the container can be sealed in other ways. The sealed container 406 may be held in a vertical orientation 410 and passed through several testing and/or verification processed. The container is held by an actuator 412 that can hold the container in the vertical orientation. The actuator 412, and the container, can pass through testing/verification operations for example on a conveyer or similar system 414, without requiring the container to repositioned or held by a different actuator. Since the actuator holding the container does not need to change between the different operations, it may result in a higher throughput system. As depicted, the single orientation testing 410 may include a static imaging system 416, which may be used to verify certain aspects of the container, such as identifying and/or verifying a fill level of the container, capturing identifying information on a label of the container, or possibly identifying/verifying visual features of the container. The static imaging system 416 may capture images while the container and/or the liquid is static, or substantially static. The container may then be spun up to a high RPM and pass through a high voltage leak detection 418 such as that described above. The spinning of the container may be stopped and the container passed to a spin imaging system 420 that may detect the presence of particles within the liquid while the liquid remains in motion. Such a spin imaging process is described in US Provisional Patent 63/405,125, filed September 9th, 2022 and titled "PARTICLE INSPECTION FOR LIQUID CONTAINERS". Based on the results of one or more of the testing and/or verification processes, the container may be passed to an accept line 422 of the packaging process for further processing or to a reject line 424.

The controller 426 depicted in FIG. 4 may comprise one or more controllers, processors, application specific integrated circuits (ASICs), field programmable gate arrays (FPGAs), and control operation of the individual components of the system 400 as well as the overall operation of the system 400. The controller 426, or controllers, may be in communication with one or more other controllers in order to operate the system 400 as desired.

It will be appreciated by one of ordinary skill in the art that the system and components shown in FIGs. 1 -4 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one or more of the steps of the described method or methods.

Some embodiments**,** outside the scope of the claimed invention, are directed to a computer program product comprising a computer-readable medium comprising code for causing a computer, or multiple computers, to implement various functions, steps, acts and/or operations, e.g. one or more of the steps described above. The computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments**,** outside the scope of the claimed invention, are directed to a processor configured to implement one or more of the various functions, steps, acts and/or operations of one or more methods described above. Accordingly, some embodiments**,** outside the scope of the claimed invention, are directed to a processor, e.g., CPU, configured to implement some of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A method for detecting a leak in a container (104), the method comprising:
receiving a container (104) in a vertical orientation, the container made from a non-conductive material and at least partially filed with a conductive liquid (108);
spinning the container (116) in the vertical orientation up to a first RPM level (118), thereby causing the conductive liquid to rise up sides of the container;
testing for a leak in the spinning container while in the vertical orientation using a high-voltage leak detection process (110); **characterized in** performing at least one additional testing procedure while the container is still held in the vertical orientation, wherein the at least one additional testing procedure is performed by one or more of:
a static image testing system (416); and
a spin image testing system (420).

2. The method of claim 1, further comprising:
after spinning the container up to the first RPM level and before testing for the leak, reducing the RPM to a second RPM (120) level lower than the first RPM level.

3. The method of claim 2, wherein the first RPM level is above a testing RPM range of the high-voltage leak detection process and the second RPM level is within the testing RPM range of the high-voltage leak detection process.

4. The method of claim 2, wherein the first RPM is approximately 3000 RPMs and the second RPM level is approximately 1500RPMs.

5. The method of claim 1, wherein the first RPM level is within a testing RPM range of the high-voltage leak detection process.

6. The method of any one of claims 1 to 4, wherein the high-voltage leak detection process provides an indication of whether the container passed or failed the testing.

7. The method of any one of claims, wherein the at least one additional testing procedure is performed during the high-voltage leak detection process.

8. The method of claim 1, wherein the at least one additional testing procedure is performed after the high-voltage leak detection process.

9. The method of any one of claims 1 to 8, wherein the container comprises one of:
a sealed glass vial;
a sealed glass ampule;
a sealed glass tube; and
a sealed glass syringe.

10. A system for detecting a leak in a container, the system comprising:
a first actuator (102) for securing a container in a vertical orientation, the container made from a non-conductive material and at least partially filed with a conductive liquid;
a second actuator (116) connected to the first actuator for spinning the first actuator with secured container;
a high voltage leak detection tester (110) for detecting a possible leak in the container using a high voltage leak detection process; **characterized in that** the system further comprises
a controller configured to cause the system to perform a method according to any one of claims 1 to 9, further comprising at least one additional testing device, wherein the at least one additional testing device comprises one or more of:
a static image testing system (416); and
a spin image testing system (420).

11. The system of claim 10, wherein the static image testing device is arranged before the high voltage leak detection tester and the spin image testing device is arranged after the high voltage leak detection tester.

12. A non-transitory computer readable medium having stored thereon instructions to cause the controller of the system of any one of claims 10 to 11 to cause performance of the method of any one of claims 1 to 9.

## Patentansprüche

1. Verfahren zum Erkennen eines Lecks in einem Behälter (104), wobei das Verfahren umfasst:
Empfangen eines Behälters (104) in einer vertikalen Ausrichtung, wobei der Behälter aus einem nicht-leitfähigen Material gefertigt ist und mindestens teilweise mit einem leitfähigen Material (108) gefüllt ist;
Schleudern des Behälters (116) in der vertikalen Ausrichtung bis zu einem ersten Drehzahlniveau (118) wodurch veranlasst wird, dass die leitfähige Flüssigkeit an den Seiten des Behälters aufsteigt;
Testen auf ein Leck in dem geschleuderten Behälter, während er sich in der vertikalen Ausrichtung befindet, unter Verwendung eines Hochspannungsprozesses zum Erkennen eines Lecks (110), **gekennzeichnet durch**
ein Durchführen von mindestens einer zusätzlichen Testprozedur, während der Behälter immer noch in der vertikalen Ausrichtung gehalten wird, wobei die mindestens eine zusätzliche Testprozedur durchgeführt wird durch eines von:
einem statischen Bildtestsystem (416); und
einem Drehbildtestsystem (420).

2. Verfahren nach Anspruch 1, das ferner umfasst:
nach dem Schleudern des Behälters bis zu dem ersten Drehzahlniveau und vor dem Testen auf ein Leck, Verringern der Drehzahl auf ein zweites Drehzahlniveau (120), das niedriger als das erste Drehzahlniveau ist.

3. Verfahren nach Anspruch 2, wobei das erste Drehzahlniveau über einem Testdrehzahlbereich des Hochspannungsprozesses zum Erkennen eines Lecks liegt und wobei das zweite Drehzahlniveau innerhalb des Testdrehzahlbereichs des Hochspannungsprozesses zum Erkennen eines Lecks liegt.

4. Verfahren nach Anspruch 2, wobei die erste Drehzahl ungefähr 3000 U/min beträgt und die zweite Drehzahl ungefähr 1500 U/min beträgt.

5. Verfahren nach Anspruch 1, wobei das erste Drehzahlniveau innerhalb eines Testdrehzahlbereichs des Hochspannungsprozesses zum Erkennen eines Lecks liegt.

6. Verfahren nach einem der Ansprüche 1 bis 4, wobei der Hochspannungsprozess zum Erkennen eines Lecks eine Anzeige bereitstellt, ob der Behälter den Test bestanden oder nicht bestanden hat.

7. Verfahren nach einem der vorangehenden Ansprüche, wobei die mindestens eine zusätzliche Testprozedur während des Hochspannungsprozesses zum Erkennen eines Lecks durchgeführt wird.

8. Verfahren nach Anspruch 1, wobei die mindestens eine zusätzliche Testprozedur nach dem Hochspannungsprozess zum Erkennen eines Lecks durchgeführt wird.

9. Verfahren nach einem der Ansprüche 1 bis 8, wobei der Behälter einen umfasst von:
einem versiegelten Glasfläschchen;
einer versiegelten Glasampulle;
einer versiegelten Glasröhre; und
einer versiegelten Glasspritze.

10. System zum Erkennen eines Lecks in einem Behälter, wobei das System umfasst:
ein erstes Stellglied (102) zum sicheren Befestigen in einer vertikalen Ausrichtung, wobei der Behälter aus einem nicht-leitfähigen Material gefertigt ist und mindestens teilweise mit einem leitfähigen Material gefüllt ist;
ein zweites Stellglied (116), das mit dem ersten Stellglied verbunden ist, zum Schleudern des ersten Stellglieds mit dem sicher befestigten Behälter;
einen Hochspannungstester zum Erkennen eines Lecks (110) für ein Erkennen eines möglichen Lecks in dem Behälter unter Verwendung eines Hochspannungsprozesses zum Erkennen eines Lecks;
**dadurch gekennzeichnet, dass** das System ferner umfasst:
eine Steuereinheit, die konfiguriert ist, um das System zu veranlassen ein Verfahren nach einem der Ansprüche 1 bis 9 durchzuführen, und das ferner mindestens eine zusätzliche Testvorrichtung umfasst, wobei die mindestens eine zusätzliche Testvorrichtung eines oder mehrerer umfasst von:
einem statischen Bildtestsystem (416); und
einem Drehbildtestsystem (420).

11. System nach Anspruch 10, wobei das statische Bildtestsystem vor dem Hochspannungstester zum Erkennen eines Lecks angeordnet wird, und wobei das Drehbildtestsystem nach dem Hochspannungstester zum Erkennen eines Lecks angeordnet wird.

12. Nicht-flüchtiges computerlesbares Medium, in dem Anweisungen gespeichert sind, um die Steuereinheit des Systems nach einem der Ansprüche 10 bis 11 zu veranlassen, eine Durchführung des Verfahrens nach einem der Ansprüche 1 bis 9 zu veranlassen.

## Revendications

1. Procédé de détection d'une fuite dans un récipient (104), le procédé comprenant :
la réception d'un récipient (104) dans une orientation verticale, le récipient étant constitué d'un matériau non conducteur et étant au moins partiellement rempli d'un liquide conducteur (108) ;
la mise en rotation (116) du récipient dans l'orientation verticale jusqu'à une première vitesse de rotation (118), ce qui amène le liquide conducteur à s'élever le long des côtés du récipient ;
le contrôle d'étanchéité du récipient en rotation tandis qu'il est dans l'orientation verticale au moyen d'un processus de détection de fuite à haute tension (110) ;
**caractérisé par**
l'exécution d'au moins une procédure de contrôle additionnelle tandis que le récipient est encore maintenu dans l'orientation verticale, l'au moins une procédure de contrôle additionnelle étant exécutée par un ou plusieurs des systèmes suivants :
un système de contrôle par image statique (416) ; et
un système de contrôle par image en rotation (420).

2. Procédé selon la revendication 1, comprenant en outre :
après la mise en rotation du récipient jusqu'à une première vitesse de rotation et avant le contrôle de l'étanchéité, la réduction de la vitesse de rotation à une deuxième vitesse de rotation (120) inférieure à la première vitesse de rotation.

3. Procédé selon la revendication 2, dans lequel la première vitesse de rotation est supérieure à une plage de vitesses de rotation de contrôle du processus de détection de fuite à haute tension et la deuxième vitesse de rotation est comprise dans la plage de vitesses de rotation de contrôle du processus de détection de fuite à haute tension.

4. Procédé selon la revendication 2, dans lequel la première vitesse de rotation est d'approximativement 3000 tours par minute et la deuxième vitesse de rotation est d'approximativement 1500 tours par minute.

5. Procédé selon la revendication 1, dans lequel la première vitesse de rotation est comprise dans la plage de vitesses de rotation de contrôle du processus de détection de fuite à haute tension.

6. Procédé selon l'une quelconque des revendications 1 à 4, dans lequel le processus de détection de fuite à haute tension fournit une indication sur le fait que le récipient a réussi ou échoué au contrôle.

7. Procédé selon l'une quelconque des revendications précédentes, dans lequel l'au moins une procédure de contrôle additionnelle est exécutée pendant le processus de détection de fuite à haute tension.

8. Procédé selon la revendication 1, dans lequel l'au moins une procédure de contrôle additionnelle est exécutée après le processus de détection de fuite à haute tension.

9. Procédé selon l'une quelconque des revendications 1 à 8, dans lequel le récipient comprend l'un des suivants :
un flacon en verre scellé ;
une ampoule en verre scellée ;
un tube en verre scellé ; et
une seringue en verre scellée.

10. Système de détection d'une fuite dans un récipient, le système comprenant :
un premier actionneur (102) pour maintenir un récipient dans une orientation verticale, le récipient étant constitué d'un matériau non conducteur et étant au moins partiellement rempli d'un liquide conducteur ;
un deuxième actionneur (116) connecté au premier actionneur pour faire tourner le premier actionneur avec le récipient maintenu ;
un contrôleur de détection de fuite à haute tension (110) pour détecter une éventuelle fuite dans le récipient au moyen d'un processus de détection de fuite à haute tension ;
**caractérisé en ce que** le système comprend en outre
un dispositif de commande configuré pour amener le système à exécuter un procédé selon l'une quelconque des revendications 1 à 9, comprenant en outre au moins un dispositif de contrôle additionnel, l'au moins un dispositif de contrôle additionnel comprenant au moins un ou plusieurs des systèmes suivants :
un système de contrôle par image statique (416) ; et
un système de contrôle par image en rotation (420).

11. Système selon la revendication 10, dans lequel le dispositif de contrôle par image statique est disposé avant le contrôleur de détection à haute tension et le dispositif de contrôle par image en rotation est disposé après le contrôleur de détection à haute tension.

12. Support non transitoire lisible par ordinateur sur lequel sont stockées des instructions destinées à amener le dispositif de commande du système selon l'une quelconque des revendications 10 à 11 à mettre en œuvre l'exécution du procédé selon l'une quelconque des revendications 1 à 9.
